# EUROPEAN PATENT SPECIFICATION

(11) **EP 3 211 941 B1**
(45) Date of publication and mention of the grant of the patent: **12.02.2020**
(21) Application number: 15851849.8
(22) Date of filing: 12.10.2015
(51) Int. Cl.: H04W 68/02, H04W 74/08

(54) **METHOD AND DEVICE FOR TRANSMITTING DOWNLINK DATA**
VERFAHREN UND VORRICHTUNG ZUR ÜBERTRAGUNG VON DOWNLINK-DATEN
PROCÉDÉ ET DISPOSITIF DE TRANSMISSION DE DONNÉES DESCENDENTES

(30) Priority: 23.10.2014 CN 201410571953
(43) Date of publication of application: 30.08.2017
(73) Proprietor: China Academy of Telecommunications Technology, Haidian District Beijing 100191 (CN)
(72) Inventor: JIAO, Bin, Beijing 100191 (CN)
(74) Representative: Nony
(86) International application number: PCT/CN2015/091781
(87) International publication number: WO 2016/062210

(56) References cited:
- EP-A1- 2 747 508
- CN-A- 101 998 679
- CN-A- 102 056 287
- CN-A- 102 916 767
- CN-A- 103 428 809
- US-A1- 2004 185 879
- US-A1- 2007 281 715
- US-A1- 2010 178 941
- US-A1- 2012 140 697

## Description

### Field

The present invention relates to the field of wireless communications, and particularly to a method and device for transmitting downlink data.

### Background

In an existing Long Term Evolution (LTE) cellular system, a Radio Resource Control (RRC) connection of a User Equipment (UE) will be released if the terminal has not transmitted or received any data for a long period of time, so if downlink data subsequently arrives, a Mobility Management Entity (MME) will firstly trigger the terminal in a paging procedure to resume an RRC signaling connection for transmitting user-plane data, where it takes hundreds of milliseconds in total to perform the existing paging procedure and control-plane connection resumption procedure.

There is a terminal triggered Service Request procedure in the paging procedure and the control-plane connection resumption procedure. In the terminal triggered Service Request procedure, the terminal needs to trigger resumption of the signaling connection for an S1 interface, and to activate security, and the terminal can transmit downlink data only after a data-plane bearer is completely resumed, thus greatly increasing a signaling load and a wait delay.

In summary, the significant signaling load and wait delay may be introduced while transmitting a burst of small data packets in the existing data transmission solution.

The US Patent US2004/185879 patent application discloses: a method of cross-paging in mobile communication systems comprises of transmitting location information of the mobile terminal from a mobile communication system to a heterogeneous mobile communication system after the mobile terminal performs location registration, requesting the mobile communication system to page the mobile terminal according to the received information in the heterogeneous mobile communication system, generating a paging message in the mobile communication system and transmitting the generated paging message from the mobile communication system to the mobile terminal; a method of cross-paging from mobile communication systems to a mobile terminal comprises of determining whether the mobile terminal has been location-registered in the mobile communication system or in the heterogeneous mobile communication system with reference to pre-registered location information of the mobile terminal when paging request of the mobile terminal occurs in the heterogeneous mobile communication system, transmitting a cross-paging message from the heterogeneous mobile communication system to the mobile communication system if the mobile terminal has been location-registered in the mobile communication system and transmitting a paging message to the mobile terminal in response to the cross-paging message in the mobile communication system.

### Summary

Embodiments of the invention provide a method and device for transmitting downlink data so as to address the problems of the significant signaling load and wait delay introduced while transmitting a burst of small data packets in the existing data transmission solution.

An embodiment of the invention provides a method for transmitting downlink data, the method including: sending, by a base station, a paging message carrying a terminal identifier, upon reception of a data packet of a first type from a Serving Gateway (SGW), where the data packet of the first type includes the terminal identifier; and after a terminal performs a random access, transmitting, by the base station, a data packet of a second type to the terminal, wherein the data packet of the second type is obtained by de-encapsulating the data packet of the first type; where: before the base station sends the paging message carrying the terminal identifier, the method further includes: putting, by the base station, a specific preamble for a random access into the paging message; after the terminal performs the random access, transmitting, by the base station, the data packet of the second type to the terminal includes: after the terminal performs the random access using the specific preamble, transmitting, by the base station, the data packet of the second type to the terminal; after the base station receives the data packet of the first type from the SGW, and before the base station sends the paging message carrying the terminal identifier, the method further includes: determining, by the base station, that an amount of data in a data packet of a third type in the received data packet of the first type is above a preset threshold; and the method further includes: transmitting, by the base station, the data packet of the second type and the terminal identifier in a group mode, upon determining that the amount of data in the data packet of the third type in the received data packet of the first type is not above the preset threshold.

Preferably after the base station receives the data packet of first type from the SGW, and before the base station sends the paging message carrying the terminal identifier, the method further includes: determining, by the base station, a first number of retransmissions according to a QoS parameter in the data packet of first type; and
after the base station sends the paging message carrying the terminal identifier, the method further includes: starting, by the base station, a first retransmission timer, if no random access request has been received when the first retransmission timer expires, then the first retransmission timer expires, determining whether the current number of retransmissions is less than the first number of retransmissions; and if the current number of retransmissions is less than the first number of retransmissions, returning to the operation of sending the paging message carrying the terminal identifier; or if the current number of retransmissions is greater than or equal to the first number of retransmissions, stopping sending the paging message.

Preferably transmitting, by the base station, the data packet of second type and the terminal identifier in the group mode includes: transmitting, by the base station, the data packet of second type and the terminal identifier by paging or broadcasting.

Preferably after the base station receives the data packet of first type from the SGW, and before the base station transmits the data packet of second type and the terminal identifier in the group mode, the method further includes: determining, by the base station, a second number of retransmissions according to the QoS parameter in the data packet of first type; and
after the base station transmits the data packet of second type and the terminal identifier in the group mode, the method further includes: starting, by the base station, a second retransmission timer, if no feedback information has been received when the second retransmission timer expires, then after the second retransmission timer expires, determining whether the current number of retransmissions is less than the second number of retransmissions, and if the current number of retransmissions is less than the second number of retransmissions, returning to the operation of transmitting the data packet of second type and the terminal identifier in the group mode; or if the current number of retransmissions is greater than or equal to the second number of retransmissions, stopping sending the paging message.

Preferably after the base station transmits the data packet of second type, the method further includes: returning, by the base station, both the terminal identifier and feedback information of the terminal to the SGW upon reception of the feedback information from the terminal.

An embodiment of the invention provides a base station for transmitting downlink data, the base station including: a first transmitting module configured to send a paging message carrying a terminal identifier upon reception of a data packet of a first type from a SGW, where the data packet of the first type includes the terminal identifier; and a first processing module configured to transmit a data packet of a second type to a terminal after the terminal performs a random access, where the data packet of the second type is obtained by de-encapsulating the data packet of the first type; where the first transmitting module is further configured to: put a specific preamble for a random access into the paging message before the first transmitting module sends the paging message carrying the terminal identifier; and transmit the data packet of the second type to the terminal after the terminal performs the random access using the specific preamble; the first processing module is further configured to determine that an amount of data in a data packet of a third type in the received data packet of the first type is above a preset threshold, after receiving the data packet of the first type from the SGW and before sending the paging message carrying the terminal identifier; and the first transmitting module is further configured to transmit the data packet of the second type and the terminal identifier in a group mode, upon determining that the amount of data in the data packet of the third type in the received data packet of the first type is not above the preset threshold.

Preferably the first transmitting module is further configured: to determine a first number of retransmissions according to a QoS parameter in the data packet of first type upon reception of the data packet of first type from the SGW and before sending the paging message carrying the terminal identifier; and after sending the paging message carrying the terminal identifier, to start a first retransmission timer, if no random access request has been received by the time when the first retransmission timer expires, to determine whether the current number of retransmissions is less than the first number of retransmissions, after the first retransmission timer expires, and if the current quantity of retransmissions is less than the first quantity of retransmissions, to return to the operation of sending the paging message carrying the terminal identifier; or if the current quantity of retransmissions is greater than or equal to the first quantity of retransmissions, to stop sending the paging message.

Preferably the first transmitting module is configured: to transmit the data packet of second type and the terminal identifier by paging or a broadcasting message.

Preferably the first transmitting module is further configured: to determine a second number of retransmissions according to the QoS parameter in the data packet of first type from the SGW upon reception of the data packet of first type; and after the data packet of second type and the terminal identifier in the group mode, to start a second retransmission timer, if no feedback information has been received by the time when the second retransmission timer expires, to determine whether the current number of retransmissions is less than the second number of retransmissions, after the second retransmission timer expires, and if the current quantity of retransmissions is less than the second quantity of retransmissions, to return to the step of transmitting the data packet of second type and the terminal identifier in the group mode; or if the current quantity of retransmissions is greater than or equal to the second quantity of retransmissions, to stop sending the paging message.

Preferably the first transmitting module is further configured: to return both the terminal identifier and feedback information of the terminal to the SGW upon reception of the feedback information from the terminal.

In the embodiments of the invention, the base station receives the data packet of first type from the SGW, and then sends the paging message carrying the terminal identifier included in the data packet of first type; and after a terminal performs a random access, then the base station will transmit the data packet of second type, obtained by de-encapsulating the data packet of first type to the terminal. Since in the embodiments of the invention, the control-plane delay and the air-interface signaling load introduced while transitioning from the idle state to the connected state after the data arrive can be avoided, and the overhead of maintaining the connection introduced because no data have been transmitted for a long period of time after the terminal is connected can be greatly lowered, the performance of the existing cellular system in terms of downlink transmission of a burst of small data.

### Brief Description of the Drawings

Fig.lA is a schematic diagram of a user-plane protocol stack according to an embodiment of the invention;
Fig.1B is a schematic structural diagram of a system for transmitting downlink data according to a first embodiment of the invention;
Fig.2 is a schematic structural diagram of a base station according to a second embodiment of the invention;
Fig.3 is a schematic structural diagram of an SGW according to a third embodiment of the invention;
Fig.4 is a schematic structural diagram of a terminal according to a fourth embodiment of the invention;
Fig.5 is a schematic structural diagram of an MME according to a fifth embodiment of the invention;
Fig.6 is a schematic structural diagram of a base station according to a sixth embodiment of the invention;
Fig.7 is a schematic structural diagram of an SGW according to a seventh embodiment of the invention;
Fig.8 is a schematic structural diagram of a terminal according to an eighth embodiment of the invention;
Fig.9 is a schematic structural diagram of an MME according to a ninth embodiment of the invention;
Fig.10 is a schematic flow chart of a method for transmitting downlink data according to a tenth embodiment of the invention;
Fig.11 is a schematic flow chart of a method for transmitting downlink data according to an eleventh embodiment of the invention;
Fig.12 is a schematic flow chart of a method for transmitting downlink data according to a twelfth embodiment of the invention;
Fig.13 is a schematic flow chart of a method for transmitting downlink data according to a thirteenth embodiment of the invention;
Fig.14 is a schematic flow chart of a method for transmitting a downlink data packet via an air interface according to a fourteenth embodiment of the invention;
Fig.15 is a schematic flow chart of a method for transmitting a downlink data packet via an air interface according to a fifteenth embodiment of the invention;
Fig.16 is a schematic flow chart of a method for triggering creation of a downlink transmission session while a terminal is being attached to a network according to a sixteenth embodiment of the invention; and
Fig.17 is a schematic flow chart of a method for triggering updating of a downlink transmission session due to a terminal location update according to a seventh embodiment of the invention.

### Detailed Description of the Embodiments

In the embodiments of the invention, a base station receives a data packet of first type from a Serving Gateway (SGW), and then sends a paging message carrying a terminal identifier in the data packet of first type; and after a terminal performs a random access, the base station will transmit a data packet of second type, obtained by de-encapsulating the data packet of first type to the terminal. Since in the embodiments of the invention, the control-plane delay and the air-interface signaling load introduced while transitioning from the idle state to the connected state after the data arrive can be avoided, and the overhead of maintaining the connection introduced because no data have been transmitted for a long period of time after the terminal is connected can be greatly lowered, the performance of the existing cellular system in terms of downlink transmission of a burst of small data can be improved.

If the embodiments of the invention are applied to an LTE system, then the data packet of first type can be a GPRS Tunneling Protocol (GTP) (GPRS stands for General Packet Radio Service) data packet, the data packet of second type can be a Packet Data Convergence Protocol (PDCP) data packet, and a data packet of third type can be an Internet Protocol (IP) data packet.

It shall be noted that the embodiments of the invention will not be limited to the foregoing three types of data packets, but the types of data packets can be modified, for example, if no IP data packet is adopted in the LTE system, then a PDCP data packet may be adapted.

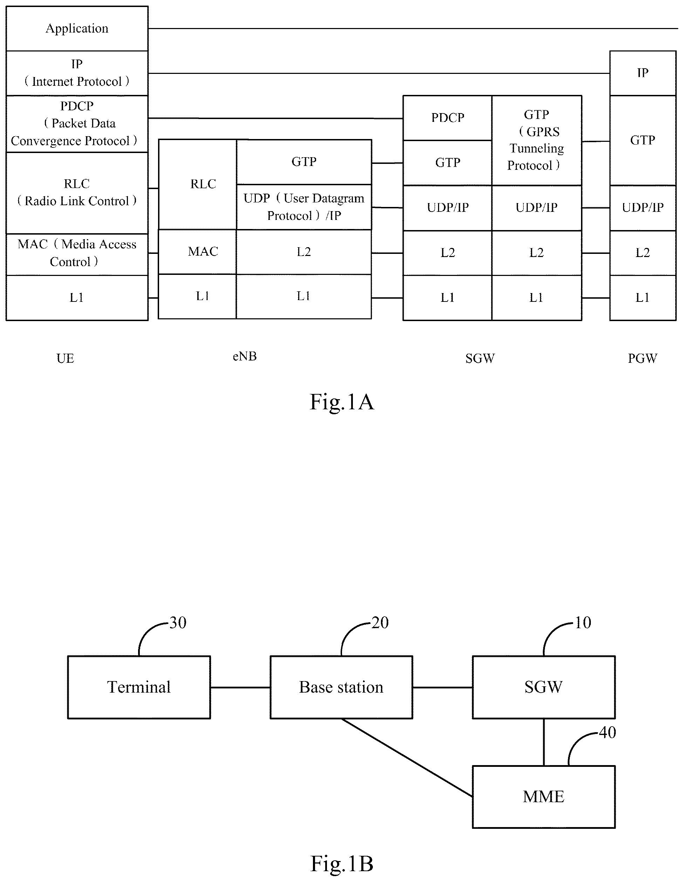

Fig.1A illustrates a schematic diagram of a user-plane protocol stack for an LTE system to which the embodiments of the invention are applied.

The terminal user plane includes the application layer responsible for processing application-layer data packets, the IP layer responsible for a function of routing to an external network, the PDCP layer responsible for decrypting a received PDCP data packet, and verifying the integrity of the PDCP data packet, the Radio Link Control (RLC) layer responsible for recovering concatenated or segmented data, and the Media Access Control (MAC) and LI layers responsible for transmitting and receiving air-interface data.

The MAC and L1 layers of the base station (an eNB) perform a function of transmitting and receiving air-interface data, the RLC layer segments or concatenates a data packet, and the GTP layer performs a function of tunneling data to the core network.

The PDCP layer of the SGW is responsible for encrypting an IP packet obtained from the Packet Data Network (PDN) Gateway (GW) (PGW), and securing the integrity of the IP packet, and the GTP layer performs a function of tunneling the packet.

The IP layer of the PGW performs a function of mapping a data packet arriving from an external network in the downlink to a corresponding GTP tunnel, and the GTP layer performs a function of tunneling the data packet.

The embodiments of the invention will not only be applicable to the LTE system, but also can be applicable to another communication system, and if they are applied to the other communication system, then the devices involved in the embodiments of the invention, e.g., the SGW, the PGW, etc., will be replaced with corresponding devices in the other communication system. The respective embodiments applied to the LTE system will be described below by way of an example, but they can be applicable to the other communication system in a similar way, so a repeated description thereof will be omitted here.

In the embodiments of the invention, the network side performs downlink data transmission and air interface transmission, for the idle terminal according to pre-configuration information.

The pre-configuration information includes:
A terminal identifier: the terminal identifier is a globally unique temporary terminal identifier distributed by a core-network control-plane entity, for example, a Globally Unique Temporary Identity (GUTI) in the existing LTE system can be reused as the terminal identifier, or a globally unique Group Identifier (ID) can be used as the terminal identifier;
Information about base stations where target terminals may reside: the gateway transmits downlink data to serving base station where all the target terminal may reside, according to the information; and
Optionally key information: the key information relates to a key for encryption and integrity-securing at the PDCP layers at the terminal and the network side.

The downlink data forwarding procedure: where the gateway determines the base stations where the terminals may reside, according to pre-stored context information, and pushes the downlink data to the serving base stations where all the target terminals may reside.

Air interface transmission procedure: where the base station firstly pages the terminal over the air interface, and allocates a specific preamble in a paging message, and if the terminal subsequently performs a random access using the specific preamble, then the base station will transmit downlink service data in the present cell.

Preferably the implementation above can be applicable to a large service data packet. If there is a small service data packet, then the base station will transmit service data via an air interface directly over a broadcast channel or a paging channel.

The embodiments of the invention will be described below in further details with reference to the drawings.

As illustrated in Fig.1B, a system for transmitting downlink data according to a first embodiment of the invention includes an SGW 10, a base station 20, a terminal 30, and an MME 40.

The SGW 10 is configured to determine a terminal corresponding to a received data packet of first type from a PGW; to determine a base station where the terminal may reside; and to transmit a data packet of first type to be transmitted, determined from the received data packet of first type, to all the candidate base stations;
The base station 20 is configured to send a paging message carrying a terminal identifier in the data packet of first type upon reception of the data packet of first type from the SGW; and after a terminal performs a random access, to transmit a data packet of second type, obtained by de-encapsulating the data packet of first type to the terminal;
The terminal 30 is configured to perform a random access, and to receive the data packet of second type from the base station, when the terminal identifier in the received paging message from the base station is the terminal identifier of the terminal; and
The MME 40 is configured to send the terminal identifier, and a list of base stations where the terminal may reside, to the SGW while the terminal is being attached, so that the SGW determines the base stations where the terminal may reside, according to the terminal identifier, and the list of base stations where the terminal may reside; and to send an IP address and the terminal identifier to the terminal through the base station upon reception of the IP address from the SGW.

Here the SGW determines the base stations where the terminal may reside, according to the list of base stations, where the terminal may reside, retrieved from the MME.

In an implementation, while the terminal is being attached, the SGW creates a correspondence relationship between the terminal identifier and the IP address according to the received terminal identifier from the MME, and the IP address from the PGW; and
Upon reception of the data packet of first type from the PGW, the SGW determines the terminal identifier corresponding to the IP address in the received data packet of first type according to the correspondence relationship between the terminal identifier and the IP address, and determines the terminal corresponding to the terminal identifier as the terminal corresponding to the received data packet of first type from the PGW.

Preferably the SGW puts the terminal identifier of the terminal into the data packet of first type to be transmitted, so that the base station issues the terminal identifier to the terminal, and the terminal determines whether there is downlink transmission for the terminal, according to the terminal identifier.

Here the SGW can determine the received data packet of first type as the data packet of first type to be transmitted. Preferably the SGW de-encapsulates the received data packet of first type to obtain a data packet of third type, encrypts the data packet of third type and secures the integrity thereof at the PDCP layer to obtain the data packet of second type, and encapsulates the data packet of second type into the data packet of first type to be transmitted.

In an implementation, before the base station sends the paging message carrying the terminal identifier included in the data packet of first type, the base station puts the specific preamble for a random access into the paging message; and
Accordingly the terminal performs a random access using the specific preamble in the received paging message from the base station when the terminal identifier in the paging message is the terminal identifier thereof; and
After a terminal performs a random access using the specific preamble, then the base station will transmit the data packet of second type obtained by de-encapsulating the data packet of first type to the terminal.

Preferably the base station determines a first number of retransmissions according to a Quality of Service (QoS) parameter in the data packet of first type upon reception of the data packet of first type from the SGW; and
After the base station sends the paging message carrying the terminal identifier included in the data packet of first type, the base station starts a first retransmission timer, if the base station has not received the random access request when the first retransmission timer expires, then the base station will determine whether the current number of retransmissions is less than the first number of retransmissions, after the first retransmission timer expires, and if so, then the base station will return to the step of sending the paging message carrying the terminal identifier included in the data packet of first type; otherwise, the base station stops transmitting the paging message.

In an implementation, the length of time of the first retransmission timer can be preset empirically, as a result of simulation, or dependent upon an application environment.

Preferably the terminal can further return the terminal identifier and feedback information to the base station upon reception of the data packet of second type from the base station.

If the SGW encrypts the data packet of third type, and secures the integrity thereof, at the PDCP layer to obtain the data packet of second type, then the terminal can return the terminal identifier and the feedback information to the base station upon successful integrity verification on the received data packet of second type received from the base station.

Accordingly the base station returns both the terminal identifier and feedback information of the terminal to the SGW upon reception of the feedback information from the terminal; and
The SGW starts a residing timer upon reception of feedback information and the terminal identifier from the base station; and transmits the data packet of first type to be transmitted, determined from the received data packet of first type to the base station sending the feedback information and the terminal identifier, upon reception of the data packet of first type from the PGW for the terminal corresponding to the terminal identifier before the residing timer expires.

If the data packet of first type from the PGW for the terminal corresponding to the terminal identifier is received before the preset residing timer expires, then it will be determined that the terminal has not moved away from the current base station, so the SGW will transmit the data packet of first type to the base station sending the feedback information and the terminal identifier instead of some base station where the terminal may reside, thus reducing the number of messages between the SGW and the base station, and the number of base stations receiving the data packet of first type, and thus the number of messages sent by the base stations via an air interface.

In an implementation, the length of time of the residing timer can be preset empirically, as a result of simulation, or dependent upon an application environment, and the less the length of time is preset, then the possibility that the terminal still resides at the current base station the higher.

Preferably in an embodiment of the invention, the base station can firstly determine whether the amount of data in the data packet of third type in the received data packet of first type is above a preset threshold, upon reception of the data packet of first type from the SGW; and
If so, then the base station will send the paging message carrying the terminal identifier included in the data packet of first type, and a random access resource;
Otherwise, preferably the base station transmits the data packet of second type obtained by de-encapsulating the data packet of first type, and the terminal identifier included in the data packet of first type in a group mode, e.g., by paging or a broadcasting message; and
Accordingly after the terminal receives the PDCP data packet and the terminal identifier transmitted by the base station in the group mode, if the received terminal identifier is the terminal identifier of the terminal, then the terminal will determine that the PDCP data packet is a PDCP data packet thereof.

Preferably the base station determines a second number of retransmissions according to the QoS parameter in the data packet of first type upon reception of the data packet of first type from the SGW.

After the base station transmits the data packet of second type obtained by de-encapsulating the data packet of first type, and the terminal identifier included in the data packet of first type in the group mode, the base station starts a second retransmission timer, if the base station has not received any feedback information when the second retransmission timer expires, then the base station will determine whether the current number of retransmissions is less than the second number of retransmissions, after the second retransmission timer expires, and if so, then the base station will return to the step of transmitting the data packet of second type obtained by de-encapsulating the data packet of first type, and the terminal identifier included in the data packet of first type in the group mode; otherwise, the terminal will stop the paging message from being sent.

In an implementation, the length of time of the second retransmission timer can be preset empirically, as a result of simulation, or dependent upon an application environment.

Preferably the terminal can further return the terminal identifier and feedback information to the base station upon reception of the PDCP data packet and the terminal identifier transmitted by the base station in the group mode, and upon determining that the PDCP data packet is a PDCP data packet thereof.

If the SGW encrypts the data packet of third type, and secures the integrity thereof, at the PDCP layer to obtain the data packet of second type, then the terminal can return the terminal identifier and the feedback information to the base station upon successful integrity verification on the received data packet of second type received from the base station.

Accordingly the base station returns both the terminal identifier and feedback information of the terminal to the SGW upon reception of the feedback information from the terminal; and

The SGW starts a residing timer upon reception of feedback information and the terminal identifier from the base station; and transmits the data packet of first type to be transmitted, determined from the received data packet of first type to the base station sending the feedback information and the terminal identifier, upon reception of the data packet of first type from the PGW for the terminal corresponding to the terminal identifier before the residing timer expires.

If the data packet of first type from the PGW for the terminal corresponding to the terminal identifier is received before the preset residing timer expires, then it will be determined that the terminal has not moved away from the current base station, so the SGW will transmit the data packet of first type to the base station sending the feedback information and the terminal identifier instead of some base station where the terminal may reside, thus reducing the number of messages between the SGW and the base station, and the number of base stations receiving the data packet of first type, and thus the number of messages sent by the base stations via an air interface.

In an implementation, the length of time of the residing timer can be preset empirically, as a result of simulation, or dependent upon an application environment, and the less the length of time is preset, the possibility that the terminal still resides at the current base station the higher.

Since the data packet of second type and the terminal identifier are transmitted in the group mode over a larger number of air-interface resources than in the paging mode, the data packet of second type and the terminal identifier can be transmitted in the group mode using the residing timer to thereby save more air-interface resources.

In an implementation, in order to further lower the amount of data transmitted via an air interface, the base station can compress an IP header of the data packet of third type in the data packet of first type, and then transmit the data packets.

Here the base station can de-encapsulate the data packet of first type upon reception thereof, or before the data packet is transmitted.

Preferably since the terminal may move constantly so that it moves out of a previous track area, preferably the terminal moving out of the original location area sends a Locate Update request to the MME through the base station; and
Accordingly upon reception of the Location Update request from the terminal through the base station, the MME updates the list of base stations where the terminal may reside, and notifies the SGW of the updated list of base stations where the terminal may reside; and
The SGW updates the list of base stations where the terminal may reside, upon reception of a list update notification of the MME.

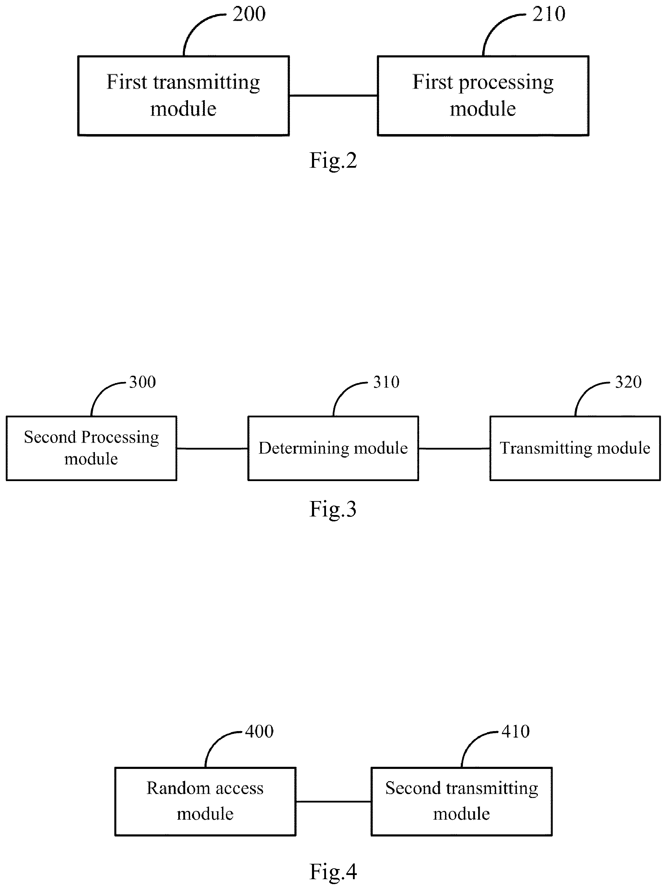

As illustrated in Fig.2, a base station according to a second embodiment of the invention includes a first transmitting module 200 and a first processing module 210.

The first transmitting module 200 is configured to send a paging message carrying a terminal identifier included in a data packet of first type upon reception of the data packet of first type from an SGW; and

The first processing module 210 is configured, after a terminal performs a random access, to transmit a data packet of second type obtained by de-encapsulating the data packet of first type to the terminal.

Preferably the first transmitting module 200 is further configured to put a specific preamble for a random access into the paging message carrying the terminal identifier included in the data packet of first type before the paging message is sent; and
The first processing module 210 is configured, after a terminal performs a random access using the specific preamble, to transmit the data packet of second type obtained by de-encapsulating the data packet of first type to the terminal.

Preferably the first transmitting module 200 is further configured to determine a first number of retransmissions according to a QoS parameter in the data packet of first type from the SGW upon reception of the data packet of first type; and after the paging message carrying the terminal identifier included in the data packet of first type is sent, to start a first retransmission timer, if no random access request has been received when the first retransmission timer expires, to determine whether the current number of retransmissions is less than the first number of retransmissions, after the first retransmission timer expires, and if so, to return to the step of sending the paging message carrying the terminal identifier included in the data packet of first type; otherwise, to stop the paging message from being sent.

Preferably the first transmitting module 200 is further configured to send the paging message carrying the terminal identifier included in the data packet of first type, and a random access resource upon determining that the amount of data in a data packet of third type in the received data packet of first type is above a preset threshold, after the data packet of first type from the SGW is received.

Preferably the first transmitting module 200 is further configured to transmit the data packet of second type obtained by de-encapsulating the data packet of first type, and the terminal identifier included in the data packet of first type in a group mode upon determining that the amount of data in the data packet of third type in the received data packet of first type is not above the preset threshold.

Preferably the first transmitting module 200 is configured to transmit the data packet of second type obtained by de-encapsulating the data packet of first type, and the terminal identifier included in the data packet of first type by paging or a broadcasting message.

Preferably the first transmitting module 200 is further configured to determine a second number of retransmissions according to the QoS parameter in the data packet of first type from the SGW upon reception of the data packet of first type; and after the data packet of second type obtained by de-encapsulating the data packet of first type, and the terminal identifier included in the data packet of first type are transmitted in the group mode, to start a second retransmission timer, if no feedback information has been received when the second retransmission timer expires, to determine whether the current number of retransmissions is less than the second number of retransmissions, after the second retransmission timer expires, and if so, to return to the step of transmitting the data packet of second type obtained by de-encapsulating the data packet of first type, and the terminal identifier included in the data packet of first type in the group mode; otherwise, to stop the paging message from being sent.

Preferably the first transmitting module 200 is further configured to compress a header of the data packet of third type in the data packet of first type before the data packet of first type is de-encapsulated into the data packet of second type.

Preferably the first transmitting module 200 is further configured to return both the terminal identifier and feedback information of the terminal to the SGW upon reception of the feedback information from the terminal.

As illustrated in Fig.3, an SGW according to a third embodiment of the invention includes a second processing module 300, a determining module 310, and a transmitting module 320.

The second processing module 300 is configured to determine a terminal corresponding to a received data packet of first type from a PGW;
The determining module 310 is configured to determine base stations where the terminal may reside; and
The transmitting module 320 is configured to transmit a data packet of first type to be transmitted, determined from the received data packet of first type, to all the candidate base stations.

Preferably the second processing module 300 is further configured, while the terminal is being attached, to create a correspondence relationship between a terminal identifier and an IP address according to the received terminal identifier from an MME, and the IP address from the PGW; and upon reception of the data packet of first type from the PGW, to determine a terminal identifier corresponding to an IP address in the received data packet of first type according to the determined correspondence relationship between the terminal identifier and the IP address, and to determine a terminal corresponding to the terminal identifier as the terminal corresponding to the received data packet of first type from the PGW.

Preferably the transmitting module 320 configured to determine the data packet of first type to be transmitted is configured:
To determine the received data packet of first type as the data packet of first type to be transmitted; or to de-encapsulate the received data packet of first type to obtain a data packet of third type, to encrypt the data packet of third type and to secure the integrity thereof at the PDCP layer to obtain the data packet of second type, and to encapsulate the data packet of second type into the data packet of first type to be transmitted.

Preferably the transmitting module 320 is further configured to put the terminal identifier of the terminal into the data packet of first type to be transmitted, before the data packet of first type to be transmitted, determined from the received data packet of first type is transmitted to all the candidate base stations.

Preferably the determining module 310 is configured to determine the base stations where the terminal may reside, according to a list of base stations, where the terminal may reside, retrieved from an MME.

Preferably the second processing module 300 is further configured to update the list of base stations where the terminal may reside, upon reception of a list update notification from the MME.

Preferably the transmitting module 320 is further configured, after the data packet of first type to be transmitted, determined from the received data packet of first type is transmitted to all the candidate base stations, to start a residing timer upon reception of feedback information and the terminal identifier from the base station; and to transmit the data packet of first type to be transmitted, determined from the received data packet of first type to the base station sending the feedback information and the terminal identifier, upon reception of the data packet of first type from the PGW for the terminal corresponding to the terminal identifier before the residing timer expires.

As illustrated in Fig.4, a terminal according to a fourth embodiment of the invention includes a random access module 400 and a second transmitting module 410.

The random access module 400 is configured to perform a random access when a terminal identifier in a received paging message from a base station is the terminal identifier of the terminal; and
The second transmitting module 410 is configured to receive a data packet of second type from the base station.

Preferably the random access module 400 is configured:
To perform a random access using a specific preamble in the paging message.

Preferably the second transmitting module 410 is further configured, upon reception of a PDCP data packet and the terminal identifier transmitted by the base station in a group mode, if the received terminal identifier is the terminal identifier of the terminal, to determine that the PDCP data packet is a PDCP data packet of the terminal.

Preferably the second transmitting module 410 is further configured to return the terminal identifier and feedback information to the base station upon determining that the PDCP data packet is the PDCP data packet of the terminal.

Preferably the second transmitting module 410 is further configured to return the terminal identifier and feedback information to the base station upon determining that a received data packet of second type from the base station has been verified for integrity successfully, after the data packet of second type is received.

Preferably the second transmitting module 410 is further configured to send a locate update request to an MME through the base station after the terminal moves out of an original location area, so that the MME instructs the SGW to update the list.

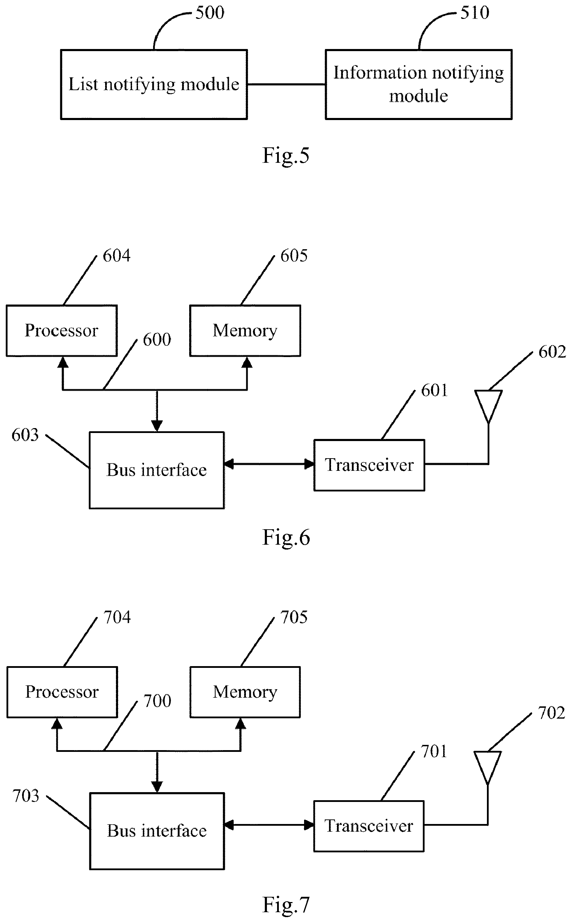

As illustrated in Fig.5, an MME according to a fifth embodiment of the invention includes a list notifying module 500 and an information notifying module 510.

The list notifying module 500 is configured to send a terminal identifier, and a list of base stations where a terminal may reside to an SGW while the terminal is being attached, so that the SGW determines the base stations where the terminal may reside, according to the terminal identifier, and the list of base stations where the terminal may reside; and
The information notifying module 510 is configured to send an IP address and the terminal identifier to the terminal through a base station upon reception of the IP address from the SGW.

Preferably the list notifying module 500 is further configured, upon reception of a Location Update request from the terminal through the base station, to update the list of base stations where the terminal may reside, and to notify the SGW of the updated list of base stations where the terminal may reside.

As illustrated in Fig.6, a base station according to a sixth embodiment of the invention includes:
A processor 604 is configured to read program in a memory 605, and to perform the processes of:
Sending a paging message carrying a terminal identifier included in a data packet of first type through a transceiver 601 upon reception of the data packet of first type from an SGW; and after a terminal performs a random access, to transmit a data packet of second type obtained by de-encapsulating the data packet of first type to the terminal through the transceiver 601; and
The transceiver 601 is configured to be controlled by the processor 604 to transmit and receive data.

Preferably the processor 604 is further configured, before the paging message carrying the terminal identifier included in the data packet of first type is sent through the transceiver 601, to put a specific preamble for a random access into the paging message; and after a terminal performs a random access using the specific preamble, to transmit the data packet of second type obtained by de-encapsulating the data packet of first type to the terminal through the transceiver 601.

Preferably the processor 604 is further configured to determine a first number of retransmissions according to a QoS parameter in the data packet of first type upon reception of the data packet of first type from the SGW through the transceiver 601; and after the paging message carrying the terminal identifier included in the data packet of first type is sent through the transceiver 601, to start a first retransmission timer, if no random access request has been received when the first retransmission timer expires, to determine whether the current number of retransmissions is less than the first number of retransmissions, after the first retransmission timer expires, and if so, to return to the step of sending the paging message carrying the terminal identifier included in the data packet of first type; otherwise, to stop the paging message from be sent.

Preferably the processor 604 is further configured to send the paging message carrying the terminal identifier included in the data packet of first type, and a random access resource through the transceiver 601 upon determining that the amount of data in a data packet of third type in the received data packet of first type is above a preset threshold, after the data packet of first type from the SGW is received through the transceiver 601.

Preferably the processor 604 is further configured to transmit the data packet of second type obtained by de-encapsulating the data packet of first type, and the terminal identifier included in the data packet of first type through the transceiver 601 in a group mode upon determining that the amount of data in a data packet of third type in the data packet of first type received by the transceiver 601 is not above the preset threshold.

Preferably the processor 604 is configured to transmit the data packet of second type obtained by de-encapsulating the data packet of first type, and the terminal identifier included in the data packet of first type through the transceiver 601 by paging or a broadcasting message.

Preferably the processor 604 is further configured to determine a second number of retransmissions according to the QoS parameter in the data packet of first type after the data packet of first type is received from the SGW by the transceiver 601; and after the data packet of second type obtained by de-encapsulating the data packet of first type, and the terminal identifier included in the data packet of first type are transmitted through the transceiver 601 in the group mode, to start a second retransmission timer, if no feedback information has been received when the second retransmission timer expires, to determine whether the current number of retransmissions is less than the second number of retransmissions, after the second retransmission timer expires, and if so, to return to the step of transmitting the data packet of second type obtained by de-encapsulating the data packet of first type, and the terminal identifier included in the data packet of first type in the group mode; otherwise, to stop the paging message from being sent.

Preferably the processor 604 is further configured to compress a header of the data packet of third type in the data packet of first type before the data packet of first type is de-encapsulated into the data packet of second type.

Preferably the processor 604 is further configured to return both the terminal identifier and feedback information of the terminal to the SGW through the transceiver 601 after the feedback information from the terminal is received by the transceiver 601.

In Fig.6, for a bus architecture (represented as a bus 600), the bus 600 can include any number of interconnected buses and bridges, and the bus 600 can link together various circuits including one or more processors represented by the processor 604, and a memory represented by the memory 605. The bus 600 can further link together various other circuits, e.g., peripheral devices, a voltage stabilizer, a power management circuit, etc., all of which are well known in the art, so a further description thereof will be omitted in this context. A bus interface 603 serves as an interface between the bus 600 and the transceiver 601. The transceiver 601 can include one or more elements, e.g., a number of transmitters and receivers serving as elements configured to communicate with various other devices over a transmission medium. Data processed by the processor 604 are transmitted through an antenna 602 over a radio medium, and furthermore data are further received and transmitted to the processor 602 through the antenna 602.

The processor 604 is responsible for managing the bus 600 and performing normal processes, and can further provide various functions including timing, a peripheral interface, voltage regulation, power management, and other control functions. The memory 605 can store data for use by the processor 604 in performing the operations.

Optionally the processor 604 can be a Central Processing Unit (CPU), an Application Specific Integrated Circuit (ASIC), a Field-Programmable Gate Array (FPGA), or a Complex Programmable Logic Device (CPLD).

As illustrated in Fig.7, an SGW according to a seventh embodiment of the invention includes:
A processor 704 is configured to read program in a memory 705, and to perform the processes of:
Determining a terminal corresponding to a data packet of first type received from a PGW through a transceiver 701; determining base stations where the terminal may reside; and transmitting a data packet of first type to be transmitted, determined from the received data packet of first type, to all the candidate base stations through the transceiver 701; and
The transceiver 701 is configured to be controlled by the processor 704 to transmit and receive data.

Preferably the processor 704 is further configured, while the terminal is being attached, to create a correspondence relationship between a terminal identifier and an IP address according to the terminal identifier from an MME received by the transceiver 701, and the IP address from the PGW; and after the data packet of first type from the PGW is received by the transceiver 701, to determine a terminal identifier corresponding to an IP address in the received data packet of first type according to the determined correspondence relationship between the terminal identifier and the IP address, and to determine a terminal corresponding to the terminal identifier as the terminal corresponding to the received data packet of first type from the PGW.

Preferably the processor 704 configured to determine the data packet of first type to be transmitted is configured:
To determine the received data packet of first type as the data packet of first type to be transmitted; or to de-encapsulate the received data packet of first type to obtain a data packet of third type, to encrypt the data packet of third type and to secure the integrity thereof at the PDCP layer to obtain the data packet of second type, and to encapsulate the data packet of second type into the data packet of first type to be transmitted.

Preferably the processor 704 is further configured to put the terminal identifier of the terminal into the data packet of first type to be transmitted, before the data packet of first type to be transmitted, determined from the received data packet of first type is transmitted to all the candidate base stations.

Preferably the processor 704 is configured to determine the base stations where the terminal may reside, according to a list of base stations, where the terminal may reside, retrieved from an MME.

Preferably the processor 704 is further configured to update the list of base stations where the terminal may reside, after a list update notification from the MME is received by the transceiver 701.

Preferably the processor 704 is further configured, after the data packet of first type to be transmitted, determined from the data packet of first type received by the transceiver 701 is transmitted to all the candidate base stations, to start a residing timer after the feedback information and the terminal identifier from the base station is received by the transceiver 701; and to transmit the data packet of first type to be transmitted, determined from the received data packet of first type to the base station sending the feedback information and the terminal identifier through the transceiver 701, upon reception of the data packet of first type from the PGW for the terminal corresponding to the terminal identifier through the transceiver 701 before the residing timer expires.

In Fig.7, for a bus architecture (represented as a bus 700), the bus 700 can include any number of interconnected buses and bridges, and the bus 700 can link together various circuits including one or more processors represented by the processor 704, and a memory represented by the memory 705. The bus 700 can further link together various other circuits, e.g., peripheral devices, a voltage stabilizer, a power management circuit, etc., all of which are well known in the art, so a further description thereof will be omitted in this context. A bus interface 703 serves as an interface between the bus 700 and the transceiver 701. The transceiver 701 can include one or more elements, e.g., a number of transmitters and receivers serving as elements configured to communicate with various other devices over a transmission medium. Data processed by the processor 704 are transmitted through an antenna 702 over a radio medium, and furthermore data are further received and transmitted to the processor 702 through the antenna 702.

The processor 704 is responsible for managing the bus 700 and performing normal processes, and can further provide various functions including timing, a peripheral interface, voltage regulation, power management, and other control functions. The memory 705 can store data for use by the processor 704 in performing the operations.

Optionally the processor 704 can be a CPU, an ASIC, an FPGA, or a CPLD.

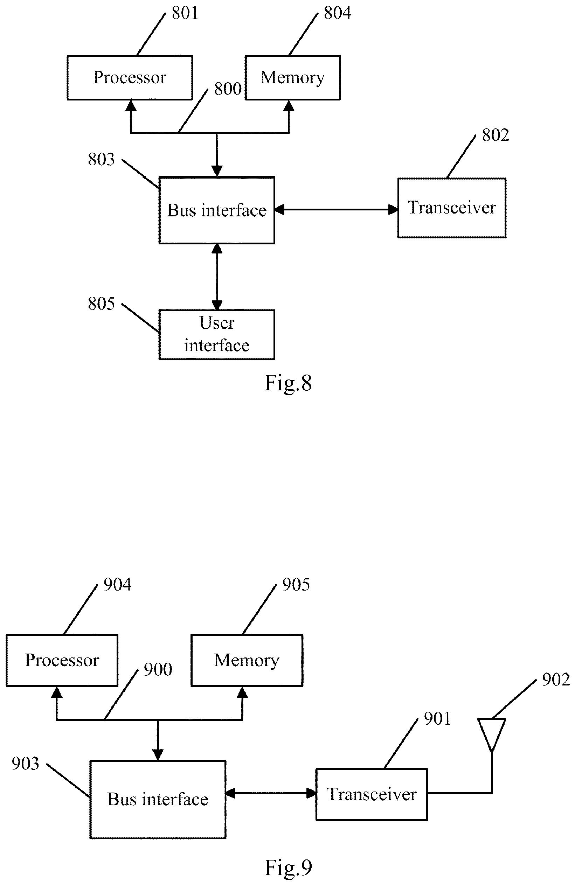

As illustrated in Fig.8, a terminal according to an eighth embodiment of the invention includes:
A processor 801 is configured to read program in a memory 804, and to perform the processes of:
performing a random access when a terminal identifier in a paging message from a base station received through a transceiver 802 is the terminal identifier of the terminal; and receiving a data packet of second type from the base station through the transceiver 802; and
The transceiver 802 is configured to be controlled by the processor 801 to transmit and receive data.

Preferably the processor 801 is configured to perform a random access using a specific preamble in the paging message.

Preferably the processor 801 is further configured, after a PDCP data packet and the terminal identifier transmitted by the base station in a group mode is received by the transceiver 802, if the received terminal identifier is the terminal identifier of the terminal, to determine that the PDCP data packet is a PDCP data packet of the terminal.

Preferably the processor 801 is further configured:
To return the terminal identifier and feedback information to the base station through the transceiver 802 upon determining that the PDCP data packet is a PDCP data packet of the terminal.

Preferably the processor 801 is further configured to return the terminal identifier and feedback information to the base station through the transceiver 802 upon determining that a received data packet of second type from the base station has been verified for integrity successfully, after the data packet of second type is received through the transceiver 802.

Preferably the processor 801 is further configured to send a locate update request to an MME through the base station after the terminal moves out of an original location area, so that the MME instructs the SGW to update the list.

In Fig.8, for a bus architecture (represented as a bus 800), the bus 800 can include any number of interconnected buses and bridges, and the bus 800 can link together various circuits including one or more processors represented by the processor 801, and a memory represented by the memory 804. The bus 800 can further link together various other circuits, e.g., peripheral devices, a voltage stabilizer, a power management circuit, etc., all of which are well known in the art, so a further description thereof will be omitted in this context. A bus interface 803 serves as an interface between the bus 800 and the transceiver 802. The transceiver 802 can include one or more elements, e.g., a number of transmitters and receivers serving as elements configured to communicate with various other devices over a transmission medium. For example, the transceiver 802 receives external data from the other devices. The transceiver 802 is configured to transmit data processed by the processor 801 to the other devices. A user interface 805, e.g., a keypad, a display, a loudspeaker, a microphone, a joystick, etc., can be further provided, dependent upon the nature of a computing system.

The processor 801 is responsible for managing the bus 800 and performing normal processes, e.g., running a general operating system as described above. The memory 804 can store data for use by the processor 801 in performing the operations.

Optionally the processor 801 can be a CPU, an ASIC, an FPGA, or a CPLD.

Fig.9 illustrates a schematic structural diagram of an MME according to a ninth embodiment of the invention, which includes:
A processor 904 is configured to read program in a memory 905, and to perform the processes of:
Sending a terminal identifier, and a list of base stations where a terminal may reside to an SGW through a transceiver 901 while the terminal is being attached, so that the SGW determines the base stations where the terminal may reside, according to the terminal identifier, and the list of base stations where the terminal may reside; and sending an IP address and the terminal identifier to the terminal through a base station upon reception of the IP address from the SGW through the transceiver 901; and
The transceiver 901 is configured to be controlled by the processor 904 to transmit and receive data.

Preferably the processor 904 is further configured, upon reception of a Location Update request from the terminal through the base station, to update the list of base stations where the terminal may reside, and to notify the SGW of the updated list of base stations where the terminal may reside, through the transceiver 901.

In Fig.9, for a bus architecture (represented as a bus 900), the bus 900 can include any number of interconnected buses and bridges, and the bus 900 can link together various circuits including one or more processors represented by the processor 904, and a memory represented by the memory 905. The bus 900 can further link together various other circuits, e.g., peripheral devices, a voltage stabilizer, a power management circuit, etc., all of which are well known in the art, so a further description thereof will be omitted in this context. A bus interface 903 serves as an interface between the bus 900 and the transceiver 901. The transceiver 901 can include one or more elements, e.g., a number of transmitters and receivers serving as elements configured to communicate with various other devices over a transmission medium. Data processed by the processor 904 are transmitted through an antenna 902 over a radio medium, and furthermore data are further received and transmitted to the processor 904 through the antenna 902.

The processor 904 is responsible for managing the bus 900 and performing normal processes, and can further provide various functions including timing, a peripheral interface, voltage regulation, power management, and other control functions. The memory 905 can store data for use by the processor 904 in performing the operations.

Optionally the processor 904 can be a CPU, an ASIC, an FPGA, or a CPLD.

Based upon the same inventive idea, embodiments of the invention further provide methods for transmitting downlink data, and since devices corresponding to the methods for transmitting downlink data are the respective devices in the system for transmitting downlink data according to the embodiments of the invention, and these methods address the problem under a similar principle to the system, reference can be made to the implementations of the system for implementations of these methods, and a repeated description thereof will be omitted here.

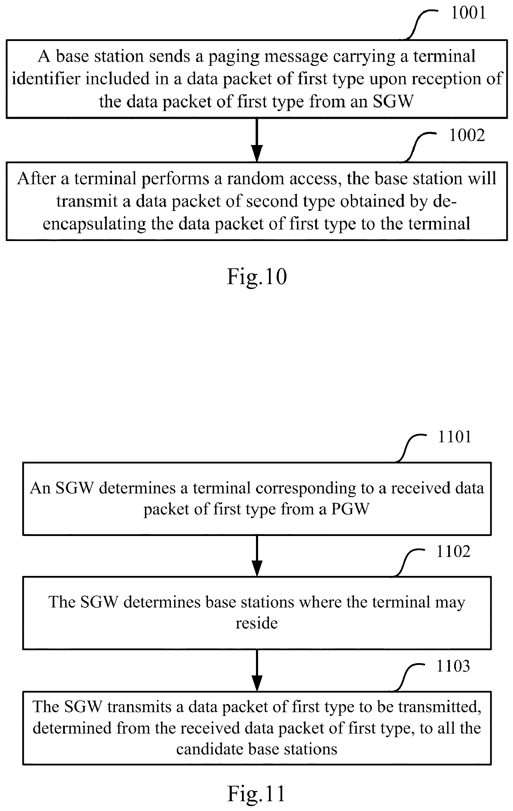

As illustrated in Fig.10, a method for transmitting downlink data according to a tenth embodiment of the invention includes:
In the step 1001, a base station sends a paging message carrying a terminal identifier included in a data packet of first type from an SGW upon reception of the data packet of first type; and
In the step 1002, after a terminal performs a random access, then the base station will transmit a data packet of second type obtained by de-encapsulating the data packet of first type to the terminal.

Preferably before the base station sends the paging message carrying the terminal identifier included in the data packet of first type, then the method further includes: the base station puts a specific preamble for a random access into the paging message; and

After a terminal performs a random access, then the base station will transmit the data packet of second type obtained by de-encapsulating the data packet of first type to the terminal will include: after a terminal performs a random access using the specific preamble, the base station will transmit the data packet of second type obtained by de-encapsulating the data packet of first type to the terminal.

Preferably after the base station receives the data packet of first type from the SGW, and before the base station sends the paging message carrying the terminal identifier included in the data packet of first type, the method further includes: the base station determines a first number of retransmissions according to a QoS parameter in the data packet of first type; and
After the base station sends the paging message carrying the terminal identifier included in the data packet of first type, the method further includes: the base station starts a first retransmission timer, if no random access request has been received when the first retransmission timer expires, then the base station will determine whether the current number of retransmissions is less than the first number of retransmissions, after the first retransmission timer expires, and if so, then the base station will return to the step of sending the paging message carrying the terminal identifier included in the data packet of first type; otherwise, the base station will stop the paging message from being sent.

Preferably after the base station receives the data packet of first type from the SGW, and before the base station sends the paging message carrying the terminal identifier included in the data packet of first type, and a random access resource, the method further includes: the base station determines that the amount of data in a data packet of third type in the received data packet of first type is above a preset threshold.

Preferably the method further includes: the base station transmits the data packet of second type obtained by de-encapsulating the data packet of first type, and the terminal identifier included in the data packet of first type in a group mode upon determining that the amount of data in the data packet of third type in the received data packet of first type is not above the preset threshold.

Preferably the base station transmitting the data packet of second type obtained by de-encapsulating the data packet of first type, and the terminal identifier included in the data packet of first type in the group mode includes: the base station transmits the data packet of second type obtained by de-encapsulating the data packet of first type, and the terminal identifier included in the data packet of first type by paging or a broadcasting message.

Preferably after the base station receives the data packet of first type from the SGW, and before the base station transmits the data packet of second type obtained by de-encapsulating the data packet of first type, and the terminal identifier included in the data packet of first type in the group mode, the method further includes: the base station determines a second number of retransmissions according to the QoS parameter in the data packet of first type.

After the base station transmits the data packet of second type obtained by de-encapsulating the data packet of first type, and the terminal identifier included in the data packet of first type in the group mode, the method further includes: the base station starts a second retransmission timer, if no feedback information has been received when the second retransmission timer expires, then the base station will determine whether the current number of retransmissions is less than the second number of retransmissions, after the second retransmission timer expires, and if so, then the base station will return to the step of transmitting the data packet of second type obtained by de-encapsulating the data packet of first type, and the terminal identifier included in the data packet of first type in the group mode; otherwise, the base station will stop the paging message from being sent.

Preferably before the base station transmits the data packet of second type obtained by de-encapsulating the data packet of first type, the method further includes: the base station compresses a header of the data packet of third type in the data packet of first type.

Preferably after the base station transmits the data packet of second type obtained by de-encapsulating the data packet of first type, the method further includes: the base station returns both the terminal identifier and feedback information of the terminal to the SGW upon reception of the feedback information from the terminal.

As illustrated in Fig.11, a method for transmitting downlink data according to an eleventh embodiment of the invention includes:
In the step 1101, an SGW determines a terminal corresponding to a received data packet of first type from a PGW;
In the step 1102, the SGW determines base stations where the terminal may reside; and
In the step 1103, the SGW transmits a data packet of first type to be transmitted, determined from the received data packet of first type, to all the candidate base stations.

Preferably before the SGW determines the terminal corresponding to the received data packet of first type from the PGW, the method further includes: while the terminal is being attached, the SGW creates a correspondence relationship between a terminal identifier and an IP address according to the received terminal identifier from an MME, and the IP address from the PGW; and
The SGW determining the terminal corresponding to the received data packet of first type from the PGW includes: the SGW determines a terminal identifier corresponding to an IP address in the received data packet of first type according to the determined correspondence relationship between the terminal identifier and the IP address, and to determines a terminal corresponding to the terminal identifier as the terminal corresponding to the received data packet of first type from the PGW.

Preferably the SGW determining the data packet of first type to be transmitted includes: the SGW determines the received data packet of first type as the data packet of first type to be transmitted; or the SGW de-encapsulates the received data packet of first type to obtain a data packet of third type, encrypts the data packet of third type and to secure the integrity thereof at the PDCP layer to obtain the data packet of second type, and encapsulates the data packet of second type into the data packet of first type to be transmitted.

Preferably before the SGW transmits the data packet of first type to be transmitted, determined from the received data packet of first type to all the candidate base stations, the method further includes: the SGW puts the terminal identifier of the terminal into the data packet of first type to be transmitted.

Preferably the SGW determining the base stations where the terminal may reside includes: the SGW determines the base stations where the terminal may reside according to a list of base stations, where the terminal may reside, retrieved from an MME.

Preferably the method further includes: the SGW updates the list of base stations where the terminal may reside, upon reception of a list update notification from the MME.

Preferably after the SGW transmits the data packet of first type to be transmitted, determined from the received data packet of first type to all the candidate base stations, the method further includes: the SGW starts a residing timer upon reception of feedback information and the terminal identifier from the base station; and the SGW transmits the data packet of first type to be transmitted, determined from the received data packet of first type to the base station sending the feedback information and the terminal identifier, upon reception of the data packet of first type from the PGW for the terminal corresponding to the terminal identifier before the residing timer expires.

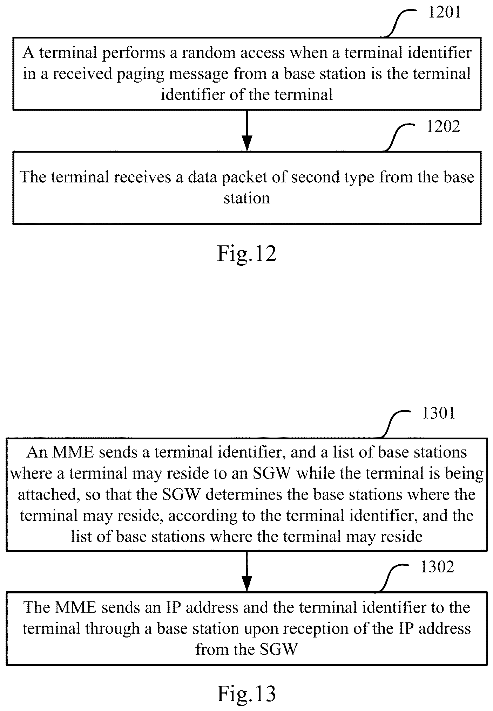

As illustrated in Fig.12, a method for transmitting downlink data according to a twelfth embodiment of the invention includes:
In the step 1201, a terminal performs a random access when a terminal identifier in a received paging message from a base station is the terminal identifier of the terminal; and
In the step 1202, the terminal receives a data packet of second type from the base station.

Preferably the terminal performing a random access includes: the terminal performs a random access using a specific preamble in the paging message.

Preferably the method further includes: after the terminal receives a PDCP data packet and the terminal identifier transmitted by the base station in a group mode, if the received terminal identifier is the terminal identifier of the terminal, then the terminal will determine that the PDCP data packet is a PDCP data packet of the terminal.

Preferably after the terminal determines that the PDCP data packet is a PDCP data packet of the terminal, the terminal returns the terminal identifier and feedback information to the base station.

Preferably after the terminal receives the data packet of second type from the base station, and before the terminal returns the terminal identifier and the feedback information to the base station, the method further includes: the terminal determines that the received data packet of second type has been verified for integrity successfully.

Preferably the method further includes: the terminal sends a locate update request to an MME through the base station after moving out of an original location area, so that the MME instructs the SGW to update the list.

As illustrated in Fig.13, a method for transmitting downlink data according to a thirteenth embodiment of the invention includes:
In the step 1301, an MME sends a terminal identifier, and a list of base stations where a terminal may reside to an SGW while the terminal is being attached, so that the SGW determines the base stations where the terminal may reside, according to the terminal identifier, and the list of base stations where the terminal may reside; and
In the step 1302, the MME sends an IP address and the terminal identifier to the terminal through a base station upon reception of the IP address from the SGW.

Preferably the method further includes: the MME, upon reception of a Location Update request from the terminal through the base station, updates the list of base stations where the terminal may reside, and notifies the SGW of the updated list of base stations where the terminal may reside.

The inventive solution will be described below in details taking an LTE system as an example.

In a first example, if there is a small data packet (e.g., a data packet with a size of tens to hundreds of bits), then the base station will transmit it directly in the downlink via an air interface by carrying a UE identifier (ID) and a downlink PDCP data packet. In view of the reliability required in a QoS parameter, the base station can blindly retransmit the data packet repeatedly via an air interface to thereby improve the reliability of transmission via the air interface. Furthermore if there are a burst of consecutive downlink data packets arriving, then the SGW can determine information about an eNB where the UE currently resides, according to an eNB ID carried in an ACK package received from the eNB, and forward subsequently arriving data packets only to the eNB where the UE currently resides, before a residing timer Timer1 expires.

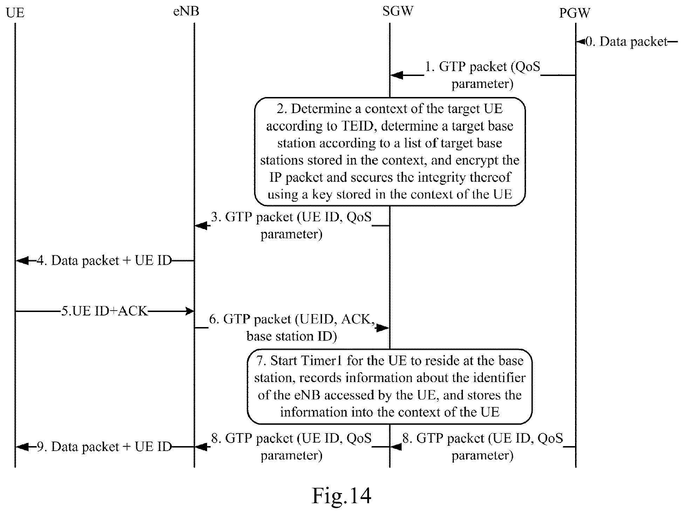

As illustrated in Fig.14, a method for transmitting a downlink data packet via an air interface according to a fourteenth embodiment of the invention includes:
In the step 1, after an IP data packet arrives, a PGW encapsulates the IP packet into a GTP data packet according to a pre-stored stream template, and transmits the GTP data packet to an SGW.

Here the GTP data packet carries a QoS parameter including information about a delay and reliability required in the IP packet.

In the step 2, the SGW determines a context of the terminal according to TEID information carried in the GTP data packet, determines all the base stations where the terminal may reside, according to information about a list of base stations stored in the context, encrypts the IP packet and secures the integrity thereof using a key stored in the context, and encapsulates it into a PDCP data packet.

In the step 3, the SGW transmits the GTP data packet resulting from encapsulation to all the base stations where the terminal may reside.

Here the GTP data packet itself further carries information about a UE ID, and the QoS parameter.

Preferably the SGW can start a retransmission timer for the current downlink data packet after transmitting the GTP data packet to the base station, and trigger retransmission of the downlink data packet if no feedback acknowledgement has been received when the retransmission timer expires, and the number of retransmissions is less than the largest number of retransmissions.

The largest number of retransmissions can be determined by the QoS parameter.

In the step 4, the base station de-encapsulates the GTP data packet into the PDCP data packet, the UE ID, and the QoS parameter upon reception of the GTP data packet, and compresses a header in the IP data packet as preconfigured, and then if the amount of data in the IP data packet is below a threshold (e.g., 100 bits), then the base station will transmit the PDCP data packet and the UE ID directly via the air interface.

Preferably the base station transmits the PDCP data packet and the UE ID through paging or over a broadcast channel.

In the step 5, if the terminal receives the PDCP data packet and the UE ID via the air interface, and determines from the UE ID that the UE ID is the UE ID thereof, then the terminal will determine that the data packet is intended for the terminal, and send a correct data reception indicator carrying the UE ID and an ACK indicator via the air interface upon completed integrity verification, and if the terminal has not been provided in advance with any uplink feedback resource, then the terminal will be provided with an uplink transmission resource by initiating a random access procedure.

In the step 6, the base station notifies in a GTP message the SGW that the data are received successfully, upon reception of the correct data reception indicator (i.e., the ACK indicator) from the terminal, where the GTP data packet carries the information about the UE ID, and the ACK indicator, and furthermore the GTP data packet may further carry information about the base station where the terminal currently resides.

In the step 7, the SGW starts a residing timer Timer1 (e.g., 20ms) upon reception of the GTP data packet in the step 6, and stores information about the identifier of the eNB where the terminal currently resides, into the context of the terminal.

In the step 8, after a subsequent downlink data packet arrives, if Timer1 does not expire, then the SGW will forward the downlink data packet directly to the corresponding eNB according to the information stored in the context of the terminal about the identifier of the eNB where the terminal currently resides.

In the step 9, the base station de-encapsulates the GTP data packet into the PDCP data packet, the UE ID, and the QoS parameter upon reception of the GTP data packet, and transmits the PDCP data packet and the information about the UE ID directly via the air interface, as in the step 4.

In a second example, the base station performs paging in a cell by carrying a terminal identifier in a paging message, where the terminal identifier can be a higher-layer UE ID uniquely identifying a terminal, or a higher-layer group ID identifying a group of terminals. Upon receiving the paging message, the terminal triggers a random access procedure upon determining from the terminal identifier in the paging message that the terminal is being paged. In order to improve the reliability of the paging message, the base station can blindly retransmit the paging message repeatedly in the cell dependent upon the reliability required in a QoS parameter.

The base station allocates and configures such a specific preamble for the terminal using the paging message that the terminal will not collide with any other terminal in a subsequent random access procedure. Also in order to alleviate a waste of preamble resources in a cell where the terminal does not reside, the specific preamble assigned by the base station for the terminal using the paging message will be released automatically after a preset period of time (e.g., 10ms), which is determined by the largest feedback delay of the terminal.

Unlike the first example, the service data are transmitted in the downlink only at the base station where the terminal really resides in this solution, so this solution is more appropriate for a large service data packet (e.g., a data packet with hundreds to thousands of bits) for the purpose of improving the utilization ratio of the air interface.

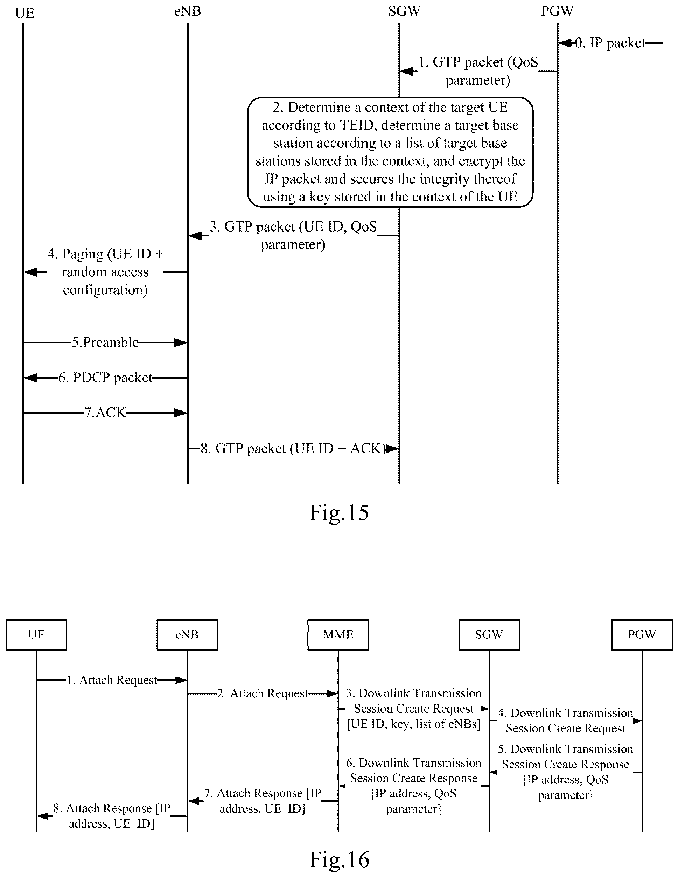

As illustrated in Fig.15, a method for transmitting a downlink data packet via an air interface according to a fifteenth embodiment of the invention includes:
In the step 1, after an IP data packet arrives, a PGW encapsulates the IP packet into a GTP data packet according to a pre-stored stream template, and transmits the GTP data packet to an SGW.

Here the GTP data packet carries a QoS parameter including information about a delay and reliability requirement in the IP packet.

In the step 2, the SGW determines a context of the terminal according to TEID information carried in the GTP data packet, determines all the base stations where the terminal may reside, according to information about a list of base stations stored in the context, encrypts the IP packet and secures the integrity thereof using a key stored in the context, and encapsulates it into a PDCP data packet.

In the step 3, the SGW transmits the GTP data packet resulting from encapsulation to all the base stations where the terminal may reside.

Here the GTP data packet itself further carries information about a UE ID, and the QoS parameter.

Preferably the SGW can start a retransmission timer for the current downlink data packet after transmitting the GTP data packet to the base station, and trigger retransmission of the downlink data packet if no feedback acknowledgement has been received when the retransmission timer expires, and the number of retransmissions is less than the largest number of retransmissions.

The largest number of retransmissions can be determined by the QoS parameter.

In the step 4, the base station de-encapsulates the GTP data packet into the PDCP data packet, the UE ID, and the QoS parameter upon reception of the GTP data packet, and compresses a header in the IP data packet as preconfigured, and then if the amount of data in the IP data packet is not below a threshold (e.g., 100 bits), then the base station will page the terminal via the air interface.

Here a paging message carries the information about the terminal identifier, and a random access resource assigned by the base station for the terminal (in order to avoid collision, the base station can allocate a specific random access resource including a specific preamble and a PRACH resource for the terminal). Furthermore the base station can pre-configure and select the number of times that the paging message is retransmitted blindly via the air interface, according to the QoS parameter. Also the base station starts a specific preamble allocation timer, where the configured specific preamble will not be assigned for other downlink data transmission until the timer expires.

In the step 5, the terminal determines from the UE ID carried in the paging message whether the current message is intended for the terminal, and if so, then the terminal will initiate a random access procedure according to the random access configuration carried in the paging message.

If the base station has not received any random access initiated by the terminal using the specific preamble, when the specific preamble timer expires, then the base station will release the specific preamble resource for allocation in subsequent data transmission.

In the step 6, the base station transmits the PDCP data packet to the terminal upon reception of the preamble sent by the terminal over the random access resource configured for the terminal.

In the step 7, if the terminal receives the PDCP data packet via the air interface, and completes integrity verification, then the base station will send a correct data reception ACK indicator via the air interface.

Here an uplink resource over which ACK is sent can be determined according to a downlink transmission resource under a mapping rule.

In the step 8, the base station notifies in a GTP message the SGW that the data are received successfully, upon reception of the correct data reception ACK indicator from the terminal.

Here the GTP data packet carries the information about the terminal identifier, and the ACK indicator.

In a third example, while a UE is being attached to a network, an MME triggers an SGW to create a downlink connection-less data transmission session for the terminal, and sends information about a UE ID, a key used by the UE, and information about base stations where the UE may reside, to the SGW. Furthermore the UE is assigned the UE ID while the UE is being attached to the network.

In an implementation, the MME is responsible for managing a location area of the UE, where the location area of the idle UE is managed at the granularity of a Tracking Area (TA) including tens to hundreds of cells, and the MME can retrieve a list of base stations according to a mapping relationship between the TA area and a cellular cell.

As illustrated in Fig.16, a method for triggering creation of a downlink transmission session while a terminal is being attached to a network according to a sixteenth embodiment of the invention includes:
In the step 1, the UE sends an Attach Request message to a base station.
In the step 2, the base station forwards the Attach Request message received from the UE to an MME.

In the step 3, the MME initiates a request procedure to an SGW for creating a downlink transmission session, by carrying information about a UE ID, a key used by the UE, and a list of base stations where the UE may reside.

Preferably the MME determines all the base stations in a location area where the UE is positioned, as the list of base stations where the UE may reside, according to the location of a base station currently accessed by the UE, and a mapping relationship between the location area where the UE is positioned, and the base station.

In the step 4, the SGW sends a Downlink Transmission Session Create Request message to a PGW.

In the step 5, the PGW allocates an IP address for the UE, and a QoS parameter for the downlink transmission session, and notifies the SGW of the IP address and the QoS parameter in a Downlink Transmission Session Create Response message.

In the step 6, the SGW sends the Downlink Transmission Session Create Response message carrying the IP address assigned for the UE, and the QoS parameter of the downlink transmission session to the MME.

In the step 7, the MME sends an Attach Response message carrying the IP address assigned for the UE, and the UE ID assigned for the UE to the eNB.

In the step 8, the eNB sends the Attach Response message to the UE.

In a fourth example, after a terminal moves so that the terminal moves out of the original location area, the terminal initiates a location update procedure, where an MME notifies an SGW of an updated list of base stations where the terminal may reside, while the terminal is initiating the location update procedure.

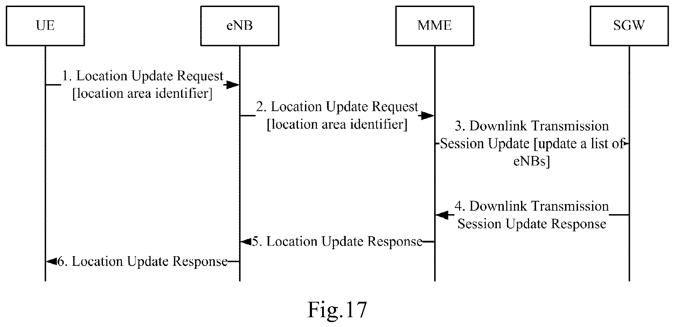

As illustrated in Fig.17, a method for triggering updating of a downlink transmission session due to a terminal location update according to a seventh embodiment of the invention includes:
In the step 1, if the moving UE detects a change to a location area identifier broadcasted in a cell where it currently resides, then the UE will initiate a location area update procedure by sending a Location Update Request message carrying the identifier of a new location area where the UE is positioned, to a base station.
In the step 2, the base station forwards the Location Update Request message received from the UE to an MME.
In the step 3, the MME updates and determines all the base stations in the location area where the UE is positioned, as a list of base stations where the UE may reside, according to information about the location of a base station currently accessed by the UE, and a mapping relationship between the location area where the UE is positioned, and the base station, and sends information about the updated list of base stations to an SGW in a Downlink Transmission Session Update message.
In the step 4, the SGW stores the information about the updated list of base stations, and sends a Downlink Transmission Session Response message to the MME.
In the step 5, the MME sends a Location Update Response message to the base station.
In the step 6, the base station sends the Location Update Response message received from the MME to the UE.

As can be apparent from the disclosure, in the embodiments of the invention, the base station receives the data packet of first type from the SGW, and then sends the paging message carrying the terminal identifier included in the data packet of first type; and after a terminal performs a random access, then the base station will transmit the data packet of second type, obtained by de-encapsulating the data packet of first type to the terminal. Since in the embodiments of the invention, the control-plane delay and the air-interface signaling load introduced while transitioning from the idle state to the connected state after the data arrive can be avoided, and the overhead of maintaining the connection introduced because no data have been transmitted for a long period of time after the terminal is connected can be greatly lowered, the performance of the existing cellular system in terms of downlink transmission of a burst of small data can be improved.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A method for transmitting downlink data, wherein the method comprises:
sending (1001), by a base station, a paging message carrying a terminal identifier, upon reception of a data packet of a first type from a Serving Gateway, SGW, wherein the data packet of the first type comprises the terminal identifier; and
after a terminal performs a random access, transmitting (1002), by the base station, a data packet of a second type to the terminal, wherein the data packet of the second type is obtained by de-encapsulating the data packet of the first type;
wherein:
before the base station sends (1001) the paging message carrying the terminal identifier, the method further comprises:
putting, by the base station, a specific preamble for a random access into the paging message; and
after the terminal performs the random access, transmitting, by the base station, the data packet of the second type to the terminal comprises:
after the terminal performs the random access using the specific preamble, transmitting, by the base station, the data packet of the second type to the terminal;
**characterized in that**, after the base station receives the data packet of the first type from the SGW, and before the base station sends (1001) the paging message carrying the terminal identifier, the method further comprises:
determining, by the base station, that an amount of data in a data packet of a third type in the received data packet of the first type is above a preset threshold;
and the method further comprises:
transmitting, by the base station, the data packet of the second type and the terminal identifier in a group mode, upon determining that the amount of data in the data packet of the third type in the received data packet of the first type is not above the preset threshold.

2. The method according to claim 1, wherein after the base station receives the data packet of the first type from the SGW, and before the base station sends (1001) the paging message carrying the terminal identifier, the method further comprises:
determining, by the base station, a first quantity of retransmissions according to a Quality of Service, QoS, parameter in the data packet of the first type; and
after the base station sends (1001) the paging message carrying the terminal identifier, the method further comprises:
starting, by the base station, a first retransmission timer; if no random access request has been received by the time when the first retransmission timer expires, then after the first retransmission timer expires, determining whether a current quantity of retransmissions is less than the first quantity of retransmissions; if the current quantity of retransmissions is less than the first quantity of retransmissions, returning to the operation of sending the paging message carrying the terminal identifier; or if the current quantity of retransmissions is greater than or equal to the first quantity of retransmissions, stopping sending the paging message.

3. The method according to claim 1, wherein transmitting, by the base station, the data packet of the second type and the terminal identifier in the group mode comprises:
transmitting, by the base station, the data packet of the second type and the terminal identifier by paging or broadcasting.

4. The method according to claim 1, wherein after the base station receives the data packet of the first type from the SGW, and before the base station transmits the data packet of the second type and the terminal identifier in the group mode, the method further comprises:
determining, by the base station, a second quantity of retransmissions according to a QoS parameter in the data packet of the first type; and
after the base station transmits the data packet of second type and the terminal identifier in the group mode, the method further comprises:
starting, by the base station, a second retransmission timer, if no feedback information has been received by the time when the second retransmission timer expires, then after the second retransmission timer expires, determining whether a current quantity of retransmissions is less than the second quantity of retransmissions; if the current quantity of retransmissions is less than the second quantity of retransmissions, returning to the operation of transmitting the data packet of second type and the terminal identifier in the group mode; or if the current quantity of retransmissions is greater than or equal to the second quantity of retransmissions, stopping sending the paging message.

5. The method according to any one of the claims 1 to 4, wherein after the base station transmits (1002) the data packet of the second type, the method further comprises:
returning, by the base station, both the terminal identifier and feedback information of the terminal to the SGW upon reception of the feedback information from the terminal.

6. Abase station for transmitting downlink data, wherein the base station comprises:
a first transmitting module (200) configured to send a paging message carrying a terminal identifier upon reception of a data packet of a first type from a Serving Gateway, SGW, wherein the data packet of the first type comprises the terminal identifier; and
a first processing module (210) configured to transmit a data packet of a second type to a terminal after the terminal performs a random access, wherein the data packet of the second type is obtained by de-encapsulating the data packet of the first type;
wherein the first transmitting module (200) is further configured to:
put a specific preamble for a random access into the paging message before the first transmitting module sends the paging message carrying the terminal identifier; and
transmit the data packet of the second type to the terminal after the terminal performs the random access using the specific preamble;
**characterized in that**, the first processing module (210) is further configured to determine that an amount of data in a data packet of a third type in the received data packet of the first type is above a preset threshold, after receiving the data packet of the first type from the SGW and before sending the paging message carrying the terminal identifier; and
the first transmitting module (200) is further configured to transmit the data packet of the second type and the terminal identifier in a group mode, upon determining that the amount of data in the data packet of the third type in the received data packet of the first type is not above the preset threshold.

7. The base station according to claim 6, wherein the first transmitting module (200) is further configured to:
determine a first quantity of retransmissions according to a Quality of Service, QoS, parameter in the data packet of the first type after reception of the data packet of the first type from the SGW and before sending the paging message carrying the terminal identifier; and
start a first retransmission timer after sending the paging message carrying the terminal identifier; if no random access request has been received by the time when the first retransmission timer expires, determine whether a current quantity of retransmissions is less than the first quantity of retransmissions after the first retransmission timer expires; if the current quantity of retransmissions is less than the first quantity of retransmissions, return to the operation of sending the paging message carrying the terminal identifier; or if the current quantity of retransmissions is greater than or equal to the first quantity of retransmissions, stop sending the paging message.

8. The base station according to claim 6, wherein the first transmitting module (200) is further configured to:
transmit the data packet of the second type and the terminal identifier by paging or broadcasting.

9. The base station according to claim 6, wherein the first transmitting module (200) is further configured to:
determine a second quantity of retransmissions according to a QoS parameter in the data packet of the first type; and
after transmitting the data packet of second type and the terminal identifier in the group mode, start a second retransmission timer, if no feedback information has been received by the time when the second retransmission timer expires, then after the second retransmission timer expires, determine whether a current quantity of retransmissions is less than the second quantity of retransmissions; if the current quantity of retransmissions is less than the second quantity of retransmissions, return to the operation of transmitting the data packet of second type and the terminal identifier in the group mode; or if the current quantity of retransmissions is greater than or equal to the second quantity of retransmissions, stop sending the paging message.

10. The base station according to any one of the claims 6 to 9, wherein the first transmitting module (200) is further configured to:
return both the terminal identifier and feedback information of the terminal to the SGW upon reception of the feedback information from the terminal.

## Patentansprüche

1. Verfahren zum Übertragen von Downlink-Daten, wobei das Verfahren umfasst:
Senden (1001) einer Paging-Nachricht, die eine Endgerätekennung trägt, durch eine Basisstation nach dem Empfang eines Datenpakets eines ersten Typs von einem Serving Gateway, SGW, wobei das Datenpaket des ersten Typs die Endgerätekennung umfasst; und
nachdem ein Endgerät einen Direktzugriff durchführt, Übertragen (1002) eines Datenpakets eines zweiten Typs durch die Basisstation an das Endgerät, wobei das Datenpaket des zweiten Typs durch Entkapselung des Datenpakets des ersten Typs erhalten wird;
wobei:
bevor die Basisstation die die Endgerätekennung tragende Paging-Nachricht sendet (1001), das Verfahren ferner umfasst:
Einfügen einer spezifischen Präambel für einen Direktzugriff auf die Paging-Nachricht durch die Basisstation; und
nachdem das Endgerät den Direktzugriff durchführt, umfasst das Übertragen des Datenpakets des zweiten Typs durch die Basisstation an das Endgerät:
nachdem das Endgerät den Direktzugriff unter Verwendung der spezifischen Präambel durchführt, Übertragen des Datenpakets des zweiten Typs durch die Basisstation an das Endgerät;
**dadurch gekennzeichnet, dass**, nachdem die Basisstation das Datenpaket des ersten Typs von dem SGW empfängt und bevor die Basisstation die Paging-Nachricht mit der Endgerätekennung sendet (1001), das Verfahren ferner umfasst:
Bestimmen, durch die Basisstation, dass eine Datenmenge in einem Datenpaket eines dritten Typs in dem empfangenen Datenpaket des ersten Typs über einem vorgegebenen Schwellenwert liegt;
und das Verfahren ferner umfasst:
Übertragen des Datenpakets des zweiten Typs und der Endgerätekennung in einem Gruppenmodus durch die Basisstation, nach dem Bestimmen, dass die Datenmenge im Datenpaket des dritten Typs im empfangenen Datenpaket des ersten Typs nicht über dem vorgegebenen Schwellenwert liegt.

2. Verfahren nach Anspruch 1, wobei, nachdem die Basisstation das Datenpaket des ersten Typs von dem SGW empfängt, und bevor die Basisstation die Paging-Nachricht mit der Endgerätekennung sendet (1001), das Verfahren ferner umfasst:
Bestimmen einer ersten Menge von erneuten Übertragungen durch die Basisstation gemäß einem Dienstgüte-Parameter, QoS-Parameter, in dem Datenpaket des ersten Typs; und
nachdem die Basisstation die die Endgerätekennung tragende Paging-Nachricht sendet (1001), das Verfahren ferner umfasst:
Starten eines ersten Timers zur erneuten Übertragung durch die Basisstation; wenn bis zum Ablauf des ersten Timers zur erneuten Übertragung keine Anforderung für einen Direktzugriff empfangen wurde, dann wird nach Ablauf des ersten Timers zur erneuten Übertragung bestimmt, ob eine aktuelle Anzahl von erneuten Übertragungen kleiner ist als die erste Anzahl von erneuten Übertragungen; wenn die aktuelle Anzahl von erneuten Übertragungen kleiner als die erste Anzahl von erneuten Übertragungen ist, Zurückkehren zu dem Vorgang des Sendens der die Endgerätekennung tragenden Paging-Nachricht; oder wenn die aktuelle Anzahl von erneuten Übertragungen größer oder gleich der ersten Anzahl von erneuten Übertragungen ist, Beenden des Sendens der Paging-Nachricht.

3. Verfahren nach Anspruch 1, wobei das Übertragen des Datenpakets des zweiten Typs und der Endgerätekennung im Gruppenmodus durch die Basisstation umfasst:
Übertragen des Datenpakets des zweiten Typs und der Endgerätekennung durch Paging oder Broadcasting durch die Basisstation.

4. Verfahren nach Anspruch 1, wobei, nachdem die Basisstation das Datenpaket des ersten Typs von dem SGW empfängt und bevor die Basisstation das Datenpaket des zweiten Typs und die Endgerätekennung im Gruppenmodus überträgt, das Verfahren ferner umfasst:
Bestimmen einer zweiten Anzahl von erneuten Übertragungen durch die Basisstation gemäß einem QoS-Parameter in dem Datenpaket des ersten Typs; und
nachdem die Basisstation das Datenpaket des zweiten Typs und die Endgerätekennung im Gruppenmodus überträgt, das Verfahren ferner umfasst:
Starten eines zweiten Timers zur erneuten Übertragung durch die Basisstation, wenn bis zum Ablauf des zweiten Timers zur erneuten Übertragung keine Feedback-Informationen empfangen wurden, dann nach Ablauf des zweiten Timers zur erneuten Übertragung, Bestimmen, ob eine aktuelle Anzahl von erneuten Übertragungen kleiner ist als die zweite Anzahl von erneuten Übertragungen;
wenn die aktuelle Anzahl von erneuten Übertragungen kleiner als die zweite Anzahl von erneuten Übertragungen ist, Zurückkehren zu dem Vorgang des Übertragens des Datenpakets des zweiten Typs und der Endgerätekennung im Gruppenmodus; oder wenn die aktuelle Anzahl von erneuten Übertragungen größer oder gleich der zweiten Anzahl von erneuten Übertragungen ist, Beenden des Sendens der Paging-Nachricht.

5. Verfahren nach einem der Ansprüche 1 bis 4, wobei, nachdem die Basisstation das Datenpaket des zweiten Typs überträgt (1002), das Verfahren ferner umfasst:
Zurückgeben sowohl der Endgerätekennung als auch der Feedback-Informationen des Endgeräts an das SGW durch die Basisstation nach dem Empfang der Feedback-Informationen vom Endgerät.

6. Basisstation zum Übertragen von Downlink-Daten, wobei die Basisstation umfasst:
ein erstes Übertragungsmodul (200), das dazu ausgelegt ist, eine eine Endgerätekennung tragende Paging-Nachricht nach dem Empfang eines Datenpakets eines ersten Typs von einem Serving Gateway, SGW, zu senden, wobei das Datenpaket des ersten Typs die Endgerätekennung umfasst; und
ein erstes Verarbeitungsmodul (210), das dazu ausgelegt ist, ein Datenpaket eines zweiten Typs an ein Endgerät zu übertragen, nachdem das Endgerät einen Direktzugriff durchgeführt hat, wobei das Datenpaket des zweiten Typs durch Entkapselung des Datenpakets des ersten Typs erhalten wird;
wobei das erste Übertragungsmodul (200) ferner dazu ausgelegt ist:
eine spezifische Präambel für einen Direktzugriff in die Paging-Nachricht einzufügen, bevor das erste Übertragungsmodul die die Endgerätekennung tragende Paging-Nachricht sendet; und
das Datenpaket des zweiten Typs an das Endgerät zu übertragen, nachdem das Endgerät den Direktzugriff unter Verwendung der spezifischen Präambel durchgeführt hat;
**dadurch gekennzeichnet, dass** das erste Verarbeitungsmodul (210) ferner dazu ausgelegt ist, zu bestimmen, dass eine Datenmenge in einem Datenpaket eines dritten Typs in dem empfangenen Datenpaket des ersten Typs über einem voreingestellten Schwellenwert liegt, nachdem das Datenpaket des ersten Typs von dem SGW empfangen wurde und bevor die die Endgerätekennung tragende Paging-Nachricht gesendet wurde; und
das erste Übertragungsmodul (200) ferner dazu ausgelegt ist, das Datenpaket des zweiten Typs und die Endgerätekennung in einem Gruppenmodus zu übertragen, nach dem Bestimmen, dass die Datenmenge in dem Datenpaket des dritten Typs in dem empfangenen Datenpaket des ersten Typs nicht über dem voreingestellten Schwellenwert liegt.

7. Basisstation nach Anspruch 6, wobei das erste Übertragungsmodul (200) ferner dazu ausgelegt ist:
eine erste Anzahl von erneuten Übertragungen gemäß einem Quality-of-Service-Parameter, QoS-Parameter, im Datenpaket des ersten Typs nach Empfang des Datenpakets des ersten Typs von dem SGW und vor dem Senden der die Endgerätekennung tragenden Paging-Nachricht zu bestimmen; und
einen ersten Timer zur erneuten Übertragung zu starten, nachdem die die Endgerätekennung tragende Paging-Nachricht gesendet wurde; wenn bis zum Ablauf des ersten Timers zur erneuten Übertragung keine Direktzugriffsanforderung empfangen wurde, Bestimmen, ob eine aktuelle Anzahl von erneuten Übertragungen kleiner als die erste Anzahl von erneuten Übertragungen ist, nachdem der erste Timer zur erneuten Übertragung abgelaufen ist; wenn die aktuelle Anzahl der erneuten Übertragungen kleiner als die erste Anzahl der erneuten Übertragungen ist, Zurückkehren zum Vorgang des Sendens der die Endgerätekennung tragenden Paging-Nachricht;
oder wenn die aktuelle Anzahl der erneuten Übertragungen größer oder gleich der ersten Anzahl der erneuten Übertragungen ist, Beenden des Sendens der Paging-Nachricht.

8. Basisstation nach Anspruch 6, wobei das erste Übertragungsmodul (200) ferner dazu ausgelegt ist:
das Datenpaket des zweiten Typs und die Endgerätekennung durch Paging oder Broadcasting zu übertragen.

9. Basisstation nach Anspruch 6, wobei das erste Übertragungsmodul (200) ferner dazu ausgelegt ist:
eine zweite Anzahl von erneuten Übertragungen gemäß einem QoS-Parameter in dem Datenpaket des ersten Typs zu bestimmen; und
nach dem Übertragen des Datenpakets von dem zweiten Typ und der Endgerätekennung im Gruppenmodus, Starten eines zweiten Timers zur erneuten Übertragung, wenn bis zum Ablauf des zweiten Timers zur erneuten Übertragung keine Feedback-Informationen empfangen wurden, dann nach Ablauf des zweiten Timers zur erneuten Übertragung, Bestimmen, ob eine aktuelle Anzahl von erneuten Übertragungen kleiner ist als die zweite Anzahl von erneuten Übertragungen; wenn die aktuelle Anzahl der erneuten Übertragungen kleiner als die zweite Anzahl der erneuten Übertragungen ist, Rückkehr zum Vorgang der Übertragung des Datenpakets des zweiten Typs und der Endgerätekennung im Gruppenmodus; oder wenn die aktuelle Anzahl der erneuten Übertragungen größer oder gleich der zweiten Anzahl der erneuten Übertragungen ist, Beenden des Sendens der Paging-Nachricht.

10. Basisstation nach einem der Ansprüche 6 bis 9, wobei das erste Übertragungsmodul (200) ferner dazu ausgelegt ist:
sowohl die Endgerätekennung als auch die Feedback-Informationen des Endgeräts an das SGW zurückzugeben, nach dem Empfang der Feedback-Informationen von dem Endgerät.

## Revendications

1. Procédé pour transmettre des données de liaison descendante, dans lequel le procédé consiste :
à envoyer (1001), au moyen d'une station de base, un message de radiomessagerie comportant un identifiant de terminal, lors de la réception d'un paquet de données d'un premier type en provenance d'une passerelle de desserte, SGW, dans lequel le paquet de données du premier type comprend l'identifiant de terminal ; et
après qu'un terminal effectue un accès aléatoire, à transmettre (1002), au moyen de la station de base, un paquet de données d'un deuxième type au terminal, dans lequel le paquet de données du deuxième type est obtenu en désencapsulant le paquet de données du premier type ;
dans lequel :
avant que la station de base n'envoie (1001) le message de radiomessagerie comportant l'identifiant de terminal, le procédé consiste en outre :
à mettre, au moyen de la station de base, un préambule spécifique pour un accès aléatoire dans le message de radiomessagerie ; et
après que le terminal effectue l'accès aléatoire, la transmission, par la station de base, du paquet de données du deuxième type au terminal consiste :
après que le terminal effectue l'accès aléatoire à l'aide du préambule spécifique, à transmettre, au moyen de la station de base, le paquet de données du deuxième type au terminal ;
**caractérisé en ce que**, après que la station de base reçoit le paquet de données du premier type en provenance de la passerelle SGW et avant que la station de base n'envoie (1001) le message de radiomessagerie comportant l'identifiant de terminal, le procédé consiste en outre :
à déterminer, au moyen de la station de base, qu'une quantité de données dans un paquet de données d'un troisième type dans le paquet de données reçu du premier type est supérieure à un seuil prédéfini ;
et le procédé consiste en outre :
à transmettre, au moyen de la station de base, le paquet de données du deuxième type et l'identifiant de terminal dans un mode groupe, lors de la détermination que la quantité de données dans le paquet de données du troisième type dans le paquet de données reçu du premier type n'est pas supérieure au seuil prédéfini.

2. Procédé selon la revendication 1, dans lequel, après que la station de base reçoit le paquet de données du premier type en provenance de la passerelle SGW et avant que la station de base n'envoie (1001) le message de radiomessagerie comportant l'identifiant de terminal, le procédé consiste en outre :
à déterminer, au moyen de la station de base, une première quantité de retransmissions en fonction d'un paramètre de qualité de service, QoS, dans le paquet de données du premier type ; et
après que la station de base envoie (1001) le message de radiomessagerie comportant l'identifiant de terminal, le procédé consiste en outre :
à mettre en marche, au moyen de la station de base, un premier temporisateur de retransmission ; si aucune demande d'accès aléatoire n'a été reçue au moment où le premier temporisateur de retransmission expire, ensuite, après que le premier temporisateur de retransmission expire, à déterminer si une quantité actuelle de retransmissions est inférieure à la première quantité de retransmissions ; si la quantité actuelle de retransmissions est inférieure à la première quantité de retransmissions, à retourner à l'opération d'envoi du message de radiomessagerie comportant l'identifiant de terminal ; ou si la quantité actuelle de retransmissions est supérieure ou égale à la première quantité de retransmissions, à arrêter l'envoi du message de radiomessagerie.

3. Procédé selon la revendication 1, dans lequel la transmission, par la station de base, du paquet de données du deuxième type et de l'identifiant de terminal dans le mode groupe consiste :
à transmettre, au moyen de la station de base, le paquet de données du deuxième type et l'identifiant de terminal par radiomessagerie ou par diffusion.

4. Procédé selon la revendication 1, dans lequel, après que la station de base reçoit le paquet de données du premier type en provenance de la passerelle SGW et avant que la station de base ne transmette le paquet de données du deuxième type et l'identifiant de terminal dans le mode groupe, le procédé consiste en outre :
à déterminer, au moyen de la station de base, une seconde quantité de retransmissions en fonction d'un paramètre de qualité de service dans le paquet de données du premier type ; et
après que la station de base transmet le paquet de données du deuxième type et l'identifiant de terminal dans le mode groupe, le procédé consiste en outre :
à mettre en marche, au moyen de la station de base, un second temporisateur de retransmission si aucune information de rétroaction n'a été reçue au moment où le second temporisateur de retransmission expire, ensuite, après que le second temporisateur de retransmission expire, à déterminer si une quantité actuelle de retransmissions est inférieure à la seconde quantité de retransmissions ; si la quantité actuelle de retransmissions est inférieure à la seconde quantité de retransmissions, à retourner à l'opération de transmission du paquet de données du deuxième type et de l'identifiant de terminal dans le mode groupe ; ou si la quantité actuelle de retransmissions est supérieure ou égale à la seconde quantité de retransmissions, à arrêter l'envoi du message de radiomessagerie.

5. Procédé selon l'une quelconque des revendications 1 à 4, dans lequel, après que la station de base transmet (1002) le paquet de données du deuxième type, le procédé consiste en outre :
à renvoyer, au moyen de la station de base, à la fois l'identifiant de terminal et les informations de rétroaction du terminal à la passerelle SGW lors de la réception des informations de rétroaction en provenance du terminal.

6. Station de base pour transmettre des données de liaison descendante, dans laquelle la station de base comprend :
un premier module de transmission (200) configuré pour envoyer un message de radiomessagerie comportant un identifiant de terminal lors de la réception d'un paquet de données d'un premier type en provenance d'une passerelle de desserte, SGW, dans laquelle le paquet de données du premier type comprend l'identifiant de terminal ; et
un premier module de traitement (210) configuré pour transmettre un paquet de données d'un deuxième type à un terminal après que le terminal effectue un accès aléatoire, dans laquelle le paquet de données du deuxième type est obtenu en désencapsulant le paquet de données du premier type ;
dans laquelle le premier module de transmission (200) est en outre configuré :
pour mettre un préambule spécifique pour un accès aléatoire dans le message de radiomessagerie avant que le premier module de transmission n'envoie le message de radiomessagerie comportant l'identifiant de terminal ; et
pour transmettre le paquet de données du deuxième type au terminal après que le terminal effectue l'accès aléatoire à l'aide du préambule spécifique ;
**caractérisée en ce que** le premier module de traitement (210) est en outre configuré pour déterminer qu'une quantité de données dans un paquet de données d'un troisième type dans le paquet de données reçu du premier type est supérieure à un seuil prédéfini après la réception du paquet de données du premier type en provenance de la passerelle SGW et avant l'envoi du message de radiomessagerie comportant l'identifiant de terminal ; et
le premier module de transmission (200) est en outre caractérisé pour transmettre le paquet de données du deuxième type et l'identifiant de terminal dans un mode groupe, lors de la détermination que la quantité de données dans le paquet de données du troisième type dans le paquet de données reçu du premier type n'est pas supérieure au seuil prédéfini.

7. Station de base selon la revendication 6, dans laquelle le premier module de transmission (200) est en outre configuré :
pour déterminer une première quantité de retransmissions en fonction d'un paramètre de qualité de service, QoS, dans le paquet de données du premier type après la réception du paquet de données du premier type en provenance de la passerelle SGW et avant l'envoi du message de radiomessagerie comportant l'identifiant de terminal ; et
pour mettre en marche un premier temporisateur de retransmission après l'envoi du message de radiomessagerie comportant l'identifiant de terminal ; si aucune demande d'accès aléatoire n'a été reçue au moment où le premier temporisateur de retransmission expire, pour déterminer si une quantité actuelle de retransmissions est inférieure à la première quantité de retransmissions après que le premier temporisateur de retransmission expire ; si la quantité actuelle de retransmissions est inférieure à la première quantité de retransmissions, pour retourner à l'opération d'envoi du message de radiomessagerie comportant l'identifiant de terminal ; ou si la quantité actuelle de retransmissions est supérieure ou égale à la première quantité de retransmissions, pour arrêter l'envoi du message de radiomessagerie.

8. Station de base selon la revendication 6, dans laquelle le premier module de transmission (200) est en outre configuré :
pour transmettre le paquet de données du deuxième type et l'identifiant de terminal par radiomessagerie ou par diffusion.

9. Station de base selon la revendication 6, dans laquelle le premier module de transmission (200) est en outre configuré :
pour déterminer une seconde quantité de retransmissions en fonction d'un paramètre de qualité de service dans le paquet de données du premier type ; et
après la transmission du paquet de données du deuxième type et de l'identifiant de terminal dans le mode groupe, pour mettre en marche un second temporisateur de retransmission si aucune information de rétroaction n'a été reçue au moment où le second temporisateur de retransmission expire, ensuite, après que le second temporisateur de retransmission expire, pour déterminer si une quantité actuelle de retransmissions est inférieure à la seconde quantité de retransmissions ; si la quantité actuelle de retransmissions est inférieure à la seconde quantité de retransmissions, pour retourner à l'opération de transmission du paquet de données du deuxième type et de l'identifiant de terminal dans le mode groupe ; ou si la quantité actuelle de retransmissions est supérieure ou égale à la seconde quantité de retransmissions, pour arrêter l'envoi du message de radiomessagerie.

10. Station de base selon l'une quelconque des revendications 6 à 9, dans laquelle le premier module de transmission (200) est en outre configuré :
pour renvoyer à la fois l'identifiant de terminal et les informations de rétroaction du terminal à la passerelle SGW lors de la réception des informations de rétroaction en provenance du terminal.
